# EUROPÄISCHE PATENTSCHRIFT

(11) **EP 1 291 975 B1**
(45) Veröffentlichungstag und Bekanntmachung des Hinweises auf die Patenterteilung: **03.01.2007**
(21) Anmeldenummer: 02016242.6
(22) Anmeldetag: 19.07.2002
(51) Int. Cl.: H01R 4/24

(54) **Kabelverzweigung**
Cable branch-off
Dispositif de dérivation

(30) Priorität: 06.09.2001 DE 20114781 U
(43) Veröffentlichungstag der Anmeldung: 12.03.2003
(73) Patentinhaber: ASPÖCK Systems GmbH, 4722 Peuerbach (AT)
(72) Erfinder: Aspöck, Felix, 4722 Peuerbach (AT)
(74) Vertreter: Strasse, Joachim

(56) Entgegenhaltungen:
- EP-A- 0 571 639
- EP-B- 0 528 574
- FR-A- 2 177 163
- US-A- 4 878 855
- US-A- 5 498 172

## Beschreibung

Die vorliegende Erfindung betrifft einen Kabelverzweiger für die Verkabelung von Fahrzeugbeleuchtungen. Die Stromzuführungen zu Leuchten am Fahrzeug, die gleichzeitig ein- und ausgeschaltet werden, wie Heckleuchten, Standlicht, Begrenzungsbeleuchtungen an der Seite oder am oberen Rand eines Fahrzeuges sind zweiadrige, gemeinsam isolierte Litzen. Überall, wo an einer Stelle eine Leuchte angeschlossen werden soll, wird von der rings um ein Fahrzeug geführten Stromführung mit einem entsprechend zugemessenen gleichartigem Kabel aus der weitergeführten Stromführung an die Leuchte abgezweigt.

Hierfür sind Kabelverzweiger bekannt. Bei einem üblichen Verzweiger wird das abzweigende Kabel mit der Leuchte verbunden und das freie Kabelende genau auf die passende Länge zu- gemessen. Auf dieses freie Ende wird als ein Abschlussstück feuchtigkeitsfest isoliert eine Kappe aufgesetzt. Diese Kappe ist mit dem freien Kabelende fest verbunden und hat eine Längsrinne parallel zum Kabelende, mit dem die Kappe auf die weiterführende Stromführung ebenfalls parallel zu dieser aufgesteckt wird. In der Längsrinne befinden sich axial und seitlich versetzt zwei Metallstifte die innerhalb der Kappe mit dem freien Kabelende elektrisch verbunden sind. Die Stifte stechen durch die Isolierung des freien Kabelendes und in die beiden Litzenadem und erhalten dadurch einen elektrischen Kontakt zur anzuschließenden Leuchte. Die Stifte ragen je mit einem kleinen Silikonring umgeben soweit in die Längsrinne, dass sie mit ihren Spitzen beim Aufdrücken auf die weiterführende Stromführung in die beiden Litzenadem mit der weiterführenden Stromführung stechen und dadurch auch hier einen elektrischen Kontakt herstellen. Das Aufdrücken geschieht mittels einer Klemme, die ebenso lang ist, wie die Kappe und die Kappe mit einem Klemmsitz umgreift.

Der Nachteil ist, dass hierbei das zur Leuchte führende Kabelende genau zugemessen und vorbereitet werden muss. Bei der Ausrüstung oder noch mehr bei der Nachrüstung eines Fahrzeugs kann aber nicht immer vorher die genaue Länge bestimmt werden. Außerdem ist diese Verbindung aufwendig in der Herstellung und Anwendung. Schließlich ist die Isolierung nicht vollständig gewährleistet.

Es ist daher Aufgabe der Erfindung, eine Kabelverzweigung für den genannten Zweck verfügbar zu machen, die kein vorheriges Zumessen erfordert, kostengünstiger in der Herstellung und Anwendung ist und eine sichere und gut isolierte Verbindung der Abzweigung ermöglicht.

Diese Aufgabe wird erfindungsgemäß dadurch gelöst, dass anstelle der fest mit dem freien Kabelende verbundenen Kappe ein auf zwei Längsseiten offner Mittelkörper aus Isolierstoff verwendet wird. Auf zwei Längsseiten sind zwei etwas kürzere Klemmkörper über zwei weitere Längsseiten aufklemmbar, von denen einer die durchgehende Stromführung und der andere ein freies Ende des Zuleitungskabels gegen den Mittelkörper klemmt.

Vorteilhafterweise ist die Längsseite des Mittelkörpers, in die das freie Ende des Zuleitungskabels gegen den Mittelkörper geklemmt ist, auf einer Stirnseite geschlossen. Gegen diese Stimseite wird das erst an Ort und Stelle zugemessene freie Ende des Zuleitungskabels einfach eingelegt, ohne dass es besonders präpariert zu werden braucht.

Weitere Einzelheiten, Merkmale und Vorteile ergeben sich aus der folgenden Beschreibung eines in der Zeichnung dargestellten Ausführungsbeilspiels sowie aus den Ansprüchen.

Es zeigen:
Fig. 1 eine schematische perspektivische Ansicht auf eine fertig geschlossene Verzweigung,
Fig.2 eine schematische perspektivische auseinandergezogene Darstellung einer offenen Verzweigung und
Fig. 3 einen Schnitt längs der Schnittlinie III -III in Figur 1.

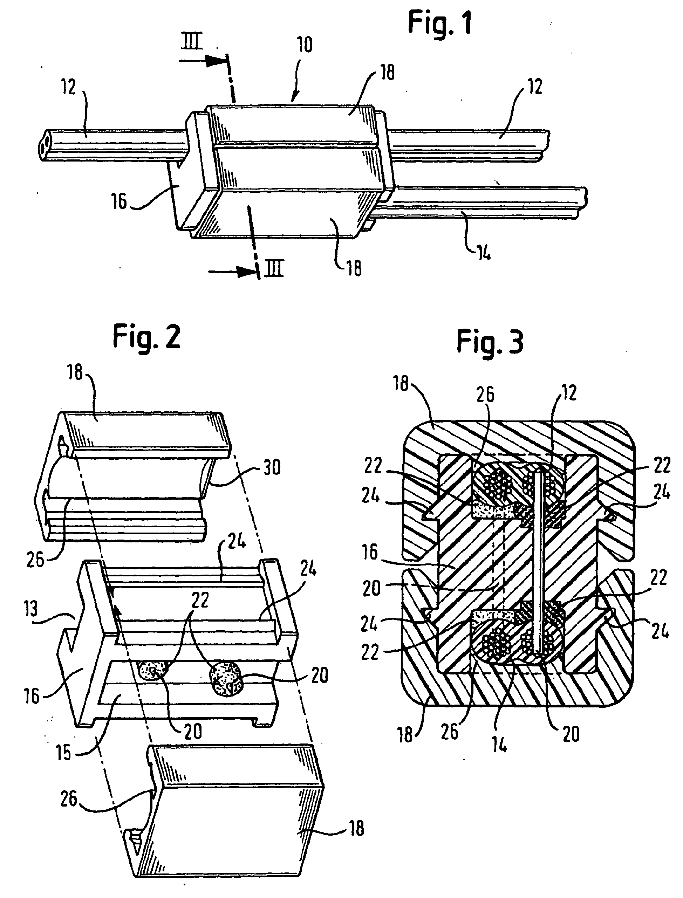

Die Kabelverzweigung findet in dem dargestellten Ausführungsbeispiel in einem Verbinder 10 statt, durch den gemäß Figur 1 ein durchgehendes zweiadriges Flachbandkabel 12 durchgeführt ist, mit dem die Stromversorgung aller angeschlossen Leuchten erfolgt. Eine solche Leuchte wird über ein Anschlusskabel 14 versorgt.

Der Aufbau des Verbinders 10 geht am besten aus Figur 2 hervor. Ein innen liegender Isolierkörper 16 hat auf einer Seite einen durchgehenden Kanal 13, in den das durchgehende zweiadriges Flachbandkabel 12 eingelegt wird. Auf der gegenüberliegenden Seite befindet sich ein einseitig geschlossener Kanal 15 in den gegen das geschlossene Ende des Kanals 15 das freie Ende des Anschlusskabels 14 eingelegt wird. In beide Kanäle 13,15 ragen elektrische Verbindungsstifte 20, die unterhalb ihrer beiderseitigen Spitzen je mit einem kleinen Silikonring 22 umgeben sind. Der innen liegender Isolierkörper 16 wird von zwei gleichgeformten Klemmkörpern 18 geschlossen. Beim Aufdrücken der Klemmkörper 18 in Richtung der in Figur 2 eingezeichneten Pfeilen rasten deren nasenförmige Innenkanten hinter beiderseits angeordnete Klemmkanten 24. Hierbei drücken die Innenflächen 26, die der Kabelform angepasst sein können, die Kabel 12 und 14 fest in die Kanäle 13 und 15, wobei die axial und seitlich versetzt angeordneten Stifte 20 gemäß Schnittdarstellung in Figur 3 in die jeweiligen Litenadem der Kabel 12 und 14 eindringen. Hierbei zerquetschen die Silikonringe 22 und bilden eine gute Isolierung. Bei anderen Kabelquerschnittsformen als die hier dargestellte, können zusätzliche Stege 30 für eine gute Abdichtung sorgen.

Wie aus Figur 2 hervorgeht, ist der innen liegende Isolierkörper 16 in seiner Längserstreckung etwas länger als die zwei gleichgeformten Klemmkörper 18, die dadurch zwischen den Stirnseiten des Isolierkörpers 16 glatt abschließen.

Gegenüber den bekannten Kabetverzweigern ist die neue Ausführungsform kostengünstiger und einfacher zu handhaben. Sie ist ferner anpassungsfähiger und sicherer.

## Patentansprüche

1. Kabelverzweiger mit einem Mittelkörper und zwei gleichen Klemmkörpern zum Anschließen von Leuchten am Fahrzeug, die gleichzeitig ein- und ausgeschaltet werden, mit einer zweiadrigen, aus gemeinsam isolierten Litzen bestehenden und um das Fahrzeug durchgehend verlegten Stromführung und mit gleichartigen Zuleitungskabeln zu den einzelnen Leuchten, wobei die elektrische Verbindung durch axial und seitlich versetzt in einem Isolierkörper angeordneten Stiften herstellt wird, die in die jeweiligen Litzen hineinstechen und unter ihren freien Spitzen mit kleinen Silikonringen umgeben sind, **dadurch gekennzeichnet, dass** der Isolierkörper ein auf zwei Längsseiten (13,15) offner Mittelkörper (16) ist, wobei auf die beiden Längsseiten (13, 15) die Klemmkörper (18) über zwei weitere Längsseiten aufklemmbar (24) sind, von denen einer die durchgehende Stromführung (12) und der andere ein freies Ende des Zuleitungskabels (14) gegen den Mittelkörper (16) klemmt, und wobei zusätzliche Stege (30) auf den Klemmkörpern für eine gute Abdichtung sorgen.

2. Kabelverzweiger nach Anspruch 1, **dadurch gekennzeichnet, dass** die Längsseite (15) des Mittelkörper (16), in die das freie Ende des Zuleitungskabels (14) gegen den Mittelkörper (16) geklemmt ist, auf einer Stirnseite geschlossen ist.

3. Kabelverzweiger nach Ansprüchen 1 und 2, **dadurch gekennzeichnet, dass** die axial und seitlich versetzte Stifte (20) beidseitig in beide Längsseiten (13,15) ragen und beidseitig mit kleinen Silikonringen (22) umgeben sind.

4. Kabelverzweiger nach Ansprüchen 1 bis 3, **dadurch gekennzeichnet, dass** die gleichen Klemmkörper (18) in der Längsachse etwas kürzer als der Mittelkörper (16) und zwischen dessen beiden Stirnseiten aufklemmbar (24) sind.

## Claims

1. A cable branch box with a middle body and two identical clamping bodies for connecting lights to the vehicle, which are simultaneously switched on and off, with a two-core current lead comprising jointly insulated flexible leads and being laid continuously around the vehicle and with feeder cables to the individual lights, said feeder cables being of the same kind, wherein the electrical connection is produced by pins disposed axially and laterally offset in an insulating body, said pins piercing into the respective flexible leads and being surrounded below their free tips with small silicone rings, **characterised in that** the insulating body is a middle body (16) open on two longitudinal sides (13, 15), wherein the clamping bodies (18) can be clamped onto the two longitudinal sides (13, 15) by means of two further longitudinal sides (24), whereof one clamp clamps the continuous current lead (12) and the other clamp clamps a free end of the feeder cable (14) against the middle body (16), and wherein additional webs (30) on the clamping bodies ensure a good seal.

2. The cable branch box according to claim 1, **characterised in that** the longitudinal side (15) of the middle body (16), into which the free end of the feeder cable (14) is clamped against the middle body (16), is closed on an end face.

3. The cable branch box according to claims 1 and 2, **characterised in that** the axially and laterally offset pins (20) project on both sides into both longitudinal sides (13, 15) and are surrounded on both sides by small silicone rings (22).

4. The cable branch box according to claims 1 to 3, **characterised in that** the identical clamping bodies (18) are somewhat shorter in the longitudinal axis than the middle body (16) and can be clamped between its two end faces (24).

## Revendications

1. Sous-répartiteur avec un corps médian et deux corps de serrage identiques pour le raccordement de lampes sur les véhicules, qui sont éteintes et allumées en même temps, avec une ligne de guide de courant à deux âmes se composant de torons isolés en commun et posés en continu autour du véhicule et de câbles d'amenée similaires aux différentes lampes, la connexion électrique étant établie par des broches disposées décalées axialement et latéralement dans un corps isolant qui s'engagent dans les torons respectifs et sont entourées en dessous de leurs pointes libres de petites bagues de silicone, **caractérisé en ce que** le corps isolant est un corps médian (16) ouvert sur les deux faces longitudinales (13, 15), sur les deux faces longitudinales (13, 15), les corps de serrage (18) pouvant être serrés (24) sur deux autres faces longitudinales dont l'un serre la ligne continue de conduite de courant (12) et l'autre une extrémité libre du câble d'amenée (14) sur le corps médian (16), et deux cloisons supplémentaires (30) assurant une bonne isolation sur les corps de serrage (16).

2. Répartiteur selon la revendication 1, **caractérisé en ce que** la face longitudinale (15) du corps médian (16), face dans laquelle est serrée l'extrémité libre du câble d'amenée (14) contre le corps médian (16), est fermée sur une face frontale.

3. Répartiteur selon les revendications 1 et 2, **caractérisé en ce que** les broches (20) décalées axialement et latéralement dépassent des deux côtés dans les deux faces longitudinales (13, 15) et entourent de part et d'autres de bagues de silicone (22).

4. Répartiteur selon les revendications 1 à 3, **caractérisé en ce que** les mêmes corps de serrage (18) sont un peu plus courts dans l'axe longitudinal que le corps médian (16) et peuvent être serrés entre ses deux faces frontales (24).
